# EUROPEAN PATENT SPECIFICATION

(11) **EP 3 011 580 B1**
(45) Date of publication and mention of the grant of the patent: **28.08.2019**
(21) Application number: 14801349.3
(22) Date of filing: 21.05.2014
(51) Int. Cl.: H01H 25/04, G05G 9/047, G06F 3/033

(54) **CONTROL MEANS**
STEUERMITTEL
MOYEN DE COMMANDE

(30) Priority: 22.05.2013 SE 1350626
(43) Date of publication of application: 27.04.2016
(73) Proprietor: Engcon Holding AB, 833 31 Strömsund (SE)
(72) Inventor: HAMMARSTRÖM, Bertil, 907 38 Umeå (SE); ÖDLING, Benjamin, 903 52 Umeå (SE)
(74) Representative: AWA Sweden AB
(86) International application number: PCT/SE2014/050623
(87) International publication number: WO 2014/189455

(56) References cited:
- WO-A1-2009/129287
- WO-A1-2012/113991
- CA-A1- 2 569 757
- US-A1- 2002 184 735
- US-A1- 2005 034 549
- US-A1- 2006 012 574
- US-A1- 2012 098 742
- US-A1- 2012 098 742

## Description

### Technical area

The present invention concerns a control means for the control of a vehicle or a working machine. The present invention concerns also a hand support intended to be arranged at a control means.

### Background

Control means that are held in one hand are used in many fields, such as various types of vehicle, working machines, and load-bearing machines with load-bearing arrangements such as hydraulically controlled booms, arms, tools and equipment. Control means that are held in one hand are present also in vehicles such as powered wheelchairs and similar. The control means is normally connected to the control system for the vehicle or machine, and is in this case often designed for several types of operation and control.

The control means is designed such that it can be moved in different directions, and it is provided with one or several buttons of different types at different positions on the control means. The buttons are manipulated, influenced through pressing, with one or several fingers or a thumb, or a combination of the same. Any one button may have several different functions, and operating the control means and at the same time manipulating the buttons places high demands on the user. In order to use such a control means, the user must not only grip and hold the control means with the hand, but also press the buttons with fingers or a thumb, or a combination of the same. This means that several muscle groups of the hand must be placed under tension at the same time. Furthermore, the user of the control means is often active during long periods of time, and it may be experienced as tiring to hold and operate the control means while at the same time manipulation of the buttons is to take place.

Furthermore, it is usual that different users have different shapes and sizes of their hands. The control means is normally designed such that a medium-large hand can be used in order to grip and operate the control means and to reach the buttons in their various positions, but those users who have a hand that is larger or smaller that a medium-large hand may experience difficulty in various ways and may, possibly, be compelled to take up an uncomfortable working position in order to be able to operate and manipulate the buttons. In particular, a person with small hands may have difficulty taking up a comfortable hand position on the control means.

The control means can be displaced in different directions through the control means being tilted, rotated or displaced to one side or in some direction away from the user. In order to carry out certain working operations, it is sometimes necessary not only to retain the control means in a certain position with the hand but also at the same time to press the buttons with at least one of the fingers and the thumb. Such situations are particularly troublesome for the user, since they involve several muscle groups in the hand at the same time, and may lead to a feeling of cramp.

This can lead to various types of problem. Tension in the hand, arm and shoulder influence the user and may lead to the experience of pain, in addition to fatigue. This may lead to poorer hand control, which affects the ability to control and may result in problems of safety.

It is, therefore, important to design the control means in such a manner that the user can operate the control means in a comfortable, relaxed and safe manner and can press the buttons without the said problems arising. It is important also that users with different sizes of hand can use the control means in a comfortable manner, and obtain good support of the hand in different positions.

The present invention is intended to solve one or several of the said problems.

### Description of the invention

One purpose of the present invention is to achieve a control means that reduces the load on the user's hand such that the hand can be used in a comfortable and relaxed manner for the operation of the control means, while at the same time parts of the hand are used for the operation of activation means.

A further purpose of the present invention is to achieve a control means that makes it possible for users with different sizes of hand to use the control means in a comfortable and relaxed manner and to obtain good support of the hand.

A further purpose of the present invention is to achieve a hand support that can be arranged at a control means in order to improve ergonomics and to make it easier to operate activation means arranged at the control means.

These purposes are achieved with a control means with a hand support characterised by the distinctive features according to claim 1 and the hand support characterised by the distinctive features according to claim 10. Embodiments given as examples are revealed in the non-independent claims.

One advantage of the invention is that the user of the control means can rest the hand and relax the musculature at the same time as the hand is positioned to operate the control means and to operate the activation means. The hand support is intended to increase comfort and to offer the lower edge of the hand a rest against the hand support, in particular when the thumb and fingers are to be used to operate one or several activation means and cannot at the same time be used to grip, hold onto, the grip. The control means according to the invention ensures that the user can in a secure manner maintain control over the control means and can carry out the desired operations.

A further advantage of the control means according to the invention is that the hand support is designed to be able to be adapted to different hand sizes and hand thicknesses through the hand support being pliable and allowing reshaping in order to partially surround the hand of the user.

A further advantage of the control means according to the invention is that the hand support functions as a further control means during certain operations. A displacement of the control means obliquely outwards from the body may place a particularly large load on the use, i.e. a drawing movement in a direction of the palm, at the same time as the activation means is to be controlled by the fingers. The user can, during such operations, control the direction of movement of the control means by pressing the back of the hand against the hand support instead of controlling of the control means through a firm grip of the complete hand around the grip of the control means. The hand support will then function not only as a support for the hand but also as a type of counterpiece, a further control means.

The control means and the hand support are preferably joined, where the hand support is united with, mounted on, the control means during the process of manufacture of the control means. Alternatively, the hand support can be marketed and sold separately in order to be arranged at existing control means or grips, or to exchange a worn-out hand support. The hand support in this case may be shaped, bent and adapted, in advance for a normal hand size or it may be extended in a plane condition such that the user can shape it according to his or her desires.

Further distinctive features and advantages of the invention will be made clear in the following detailed description of the invention, which constitutes an example, and is therefore not to be interpreted in such a manner that it is limiting for the protective scope of the invention. References to the attached drawings have been included in the text in order to facilitate understanding, where equivalent or similar parts have been given the same reference number. The hand support may be fixed arranged at a control means according to the invention.

The term "back of the hand" is used in the following description and patent claims, and it here denotes the back of the hand, i.e. the side of the hand away from which the fingers are curved. The expressions "side of the hand" and "side" denote the side of the hand at the little finger, which is opposite to the thumb side of the hand, i.e. the side that joins the palm to the back of the hand.

The invention is described in more detail through embodiments and with reference to the attached drawings, of which:
**Figure 1** illustrates an embodiment of the control stick according to the invention in a view from the front, seen from the user.
**Figure 2** illustrates the control stick according to Figure 1 in a view from the rear.
**Figure 3** illustrates the control stick according to Figure 1 in a view from the right.
**Figure 4** illustrates the control stick according to Figure 1 in a view from the left.
**Figure 5** illustrates the control stick according to Figure 1 in which the condition of the hand support has been changed and displaced upwards.
**Figure 6** illustrates the control stick according to Figure 1 in which the condition of the hand support has been changed and displaced radially outwards.
**Figure 7** illustrates the control stick according to Figure 1 in which the condition of the hand support has been changed and displaced forwards.
**Figure 8** illustrates the control stick according to Figure 1 in a perspective view with a hand.
**Figure 9** illustrates the control stick according to Figure 1 with the hand support shown in a longitudinal cross-section.
**Figure 10** illustrates a hand support according to the invention in a view from the front.
**Figures 11A-11D** illustrate a hand support according to the invention in a longitudinal cross-section.
**Figures 12A-12D** illustrate a second hand support according to the invention in a longitudinal cross-section.

### Detailed description and embodiments

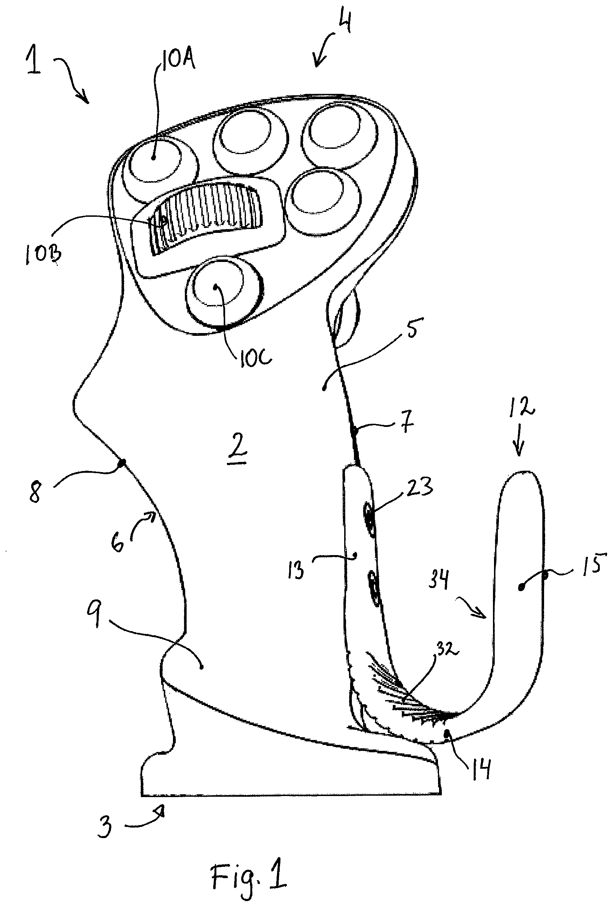

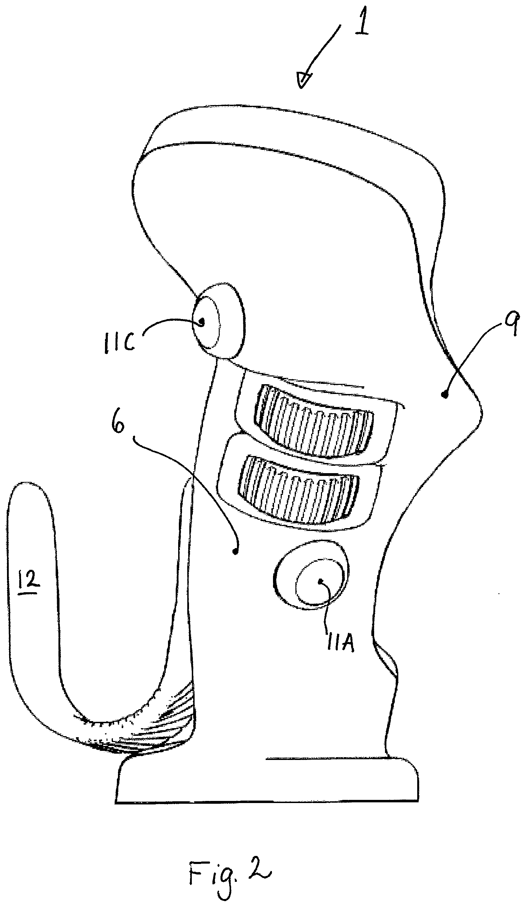

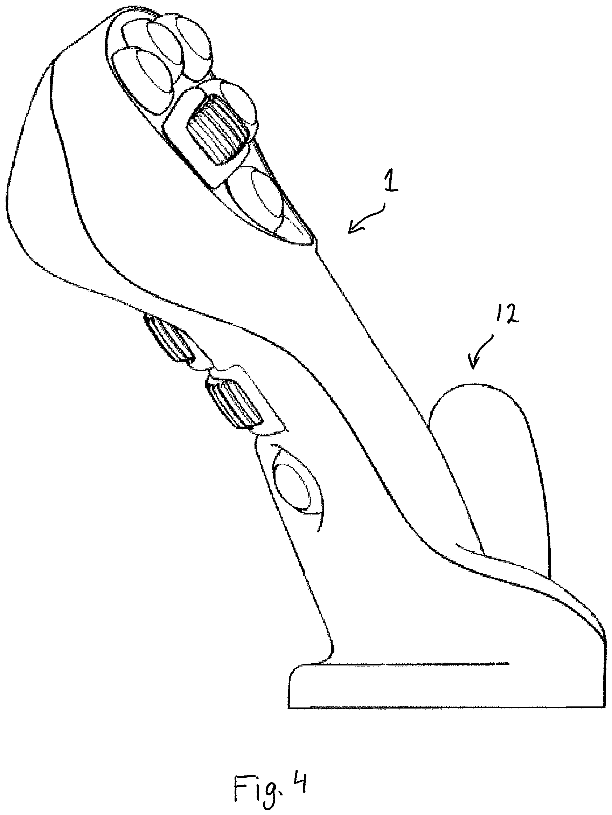

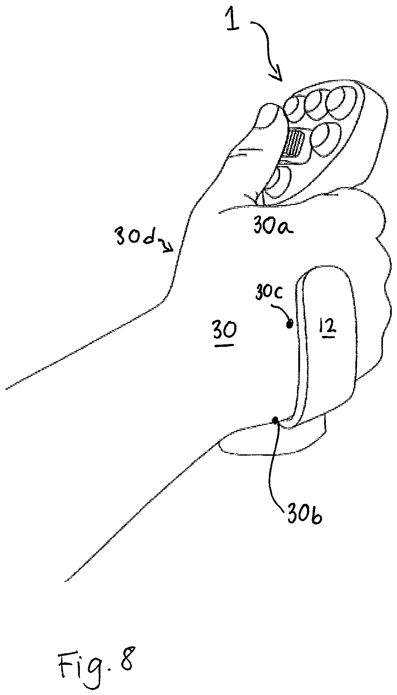

Figures 1-4 show a control means 1 according to the invention. The control means comprises an extended grip 2 with a connection end 3 at its lower end and a free upper end 4 arranged opposite to the connection end, such that the grip 2 is arranged between the connection end and the free end. The grip 2 is intended to be surrounded by the hand 30 of the operator (see Figure 8). The grip 2 is arranged to be held by one hand, where the hand is oriented with its thumb side 30a directed upwards.

It should be noted that the examples in the description and shown in the attached drawings describe and show a control stick that is intended to be gripped with the right hand. The control stick according to the invention may, of course, be adapted to instead be used by a left hand.

The control means 1 shown in Figure 1 is arranged at a free end of a control rod (not shown in the drawings) such as a joystick or similar mechanical guide arrangement or guide means that allows the control means 1 to be freely displaced in all directions in the horizontal plane, both through drawing and through the pressure of the hand 30 in different directions.

The control means 1 is in Figures 1-4 connected to the guidance means in such a manner that the point of rotation of the control means is the same as that of the guide means. In such cases, it is advantageous for reasons of ergonomics that the control means is adjustably arranged at the guide means, i.e. the user adjusts the position of the control means and subsequently locks, fixes, it in the desired position. It is normal that the user then angles the control means away from a vertical condition.

The control means 1 can be displaced or moved in the horizontal plane. The distance from a centrally located normal condition to an outer condition varies with the position of the point of rotation. In particular, when the control means is arranged at the free end of a guide means, such as, for example a joystick, it is sometimes necessary for the user to move not only the hand, but also the lower arm and possibly also the upper arm, in a direction away from the body. It is normally possible for the control means 1 to be moved in different directions to a final position that is located at a distance from the normal position. This may take place through the control means being tilted, rotated or displaced to one side or away from the user in some direction. It is necessary at certain of the final positions of the movements not only to retain the control means with the hand but also to operate, to activate or deactivate, to both activate and deactivate, the activation means. Such situations are particularly troublesome for the user, since they involve several muscle groups in the hand at the same time, and lead to a feeling of cramp. It is particularly important when the control means is arranged to guide and control movements of a tool mounted at a working machine that the work is carried out with a high level of safety.

It is conceivable also to arrange the control means separate, and directly connected to a guide system.

The control means comprises a front surface 5, also known as the "thumb surface" 5, facing the operator, and a rear surface 6, also known as the "finger surface" 6, facing away from the operator, an intermediate surface 7 that is intended to come into contact with the palm, and a finger-tip surface 8 arranged opposite, where the finger tips and the thumb meet.

The control means is provided with ergonomic support surfaces 9 such that the user can hold the control means in a comfortable manner. The support surfaces 9 are intended to help the user to maintain the hand centred and in the correct position.

At least one of the free end 4 and the grip 2 of the control means is provided with at least one activation means 10, preferably several activation means 10A, 10B, 10C intended to be operated, to be activated or deactivated, by a part of the hand, one or several fingers or the thumb.

The thumb surface 5 comprises at least one, preferably several, activation means 10A, 10B, 10C that can be operated and that have been placed such that they can be operated by the thumb of the hand. Also the finger surface 6 preferably comprises at least one, preferably several, activation means 11A, 11B, 11C that can be operated and that have been placed such that they can be operated by the fingers of the hand. It is emphasised that the drawing shows only one embodiment: the activation means may be varied and may be combined in many different ways.

The activation means comprises, for example, a button 10A, 11A, a displaceable element 10B, 11B, or similar. The function of such a button 10A, 11A is activated or deactivated by pressing with a thumb or finger. The button may comprise also different functions, such as return tension and toggle switches etc.

An activation means 10B, 11B in the form of a displaceable element, such as a roller that can be rotated or a slider control, may be arranged transverse to the longitudinal direction of the control means, such that it can be operated through motion of the thumb or finger transverse to the longitudinal direction of the control means. Alternatively, the displaceable element may be arranged along the longitudinal direction of the control means (not shown in the drawings), such that it can be operated through motion of the thumb or finger along the longitudinal direction of the control means.

The displaceable element may be arranged with an automatic return function that returns the displaceable element to a normal position, an initial condition.

Each activation means 10A-10C, 11A-11C is designed to control one operation such as a motion of the vehicle or working machine at which the control means is mounted. Each activation means generates an analogue or digital signal that depends on the manner in which the activation means is operated. The one or several activation means influences or influence electrical or electronic functions that lead to, for example the activation or deactivation of a hydraulic valve.

The control stick 1 is designed to be gripped by the user's hand from the side. The user's hand 30 is thus primarily oriented such that the thumb surface of the hand faces upwards, and the centre of the hand and the fingers come into contact with the intermediate surface 7 and the finger surface 6 of the grip. It is important that the operator's hand has a well designed support, independent of the operation or combination of operations that is to be carried out. The grip 2 is thus designed in an ergonomically advantageous manner with thumb support and finger support such that the operator's hand obtains support, and unnecessary load is avoided.

The control means shown in Figure 1 is intended to interact with a working machine that may have different machine mechanisms of, for example, not only hydraulic but also electrical type. A load-bearing working machine has equipment such that it can raise and lower a load arm with a tool, and this normally takes place by the use of hydraulic operation, but it can be conceived that this is carried out electronically. Furthermore, the tool can usually be rotated around a shaft in different directions, and also this may take place hydraulically electrically. The control means, which is normally a control rod, may be arranged in an operator cabin in a working machine, and its end may be provided with a control means according to the present invention.

The control means is provided with ergonomical support surfaces 9 such that the user can grip and hold the control means comfortably. The support surfaces 9 are intended to help to maintain the hand centred and in the right position. The control means comprises also a hand support 12 arranged at the grip 2, preferably at the intermediate surface 7 of the grip, facing the user's palm.

The hand support 12 comprises an inner part 13 arranged at the grip of the control means 2, a free outer end 15, and a connector, also known as the "load-relief part" 14, that unites the inner part 13 and the free outer end 15.

The hand support 12 is arranged at the grip of the control means such that the transverse side 30B of the user's hand can come into contact with the load-relief part 14, and the back 30C of the hand can come into contact with the free outer end 15. The free outer end 15 functions in this way as a support for the back of the hand.

The hand support 12 in Figure 1 has a yoke shape with a curved transverse profile, also known as a "U-shape". The hand support 12 may have also a J-shape. It is advantageous that the hand support and the free outer end 15 extend up at the back of the hand, in order to provide the intended support. If it is longer than the width of the hand, however, the risk of unintentional deformation of the hand support increases, and this may hinder the mobility and working space for the hand.

The inner part 13 is arranged at the intermediate surface 7 of the grip. It is preferable that the hand support 12 be fixed arranged at the grip with a fixed join, for example, one or several screws or bolts. In another embodiment (not shown in the drawings) the hand support is mounted at the control means in a manner that allows it to be removed in order to allow exchange in the event of wear.

The load-relief part 13 of the hand support is intended to be designed such that the transverse side 30B of the hand is to come into contact with the load-relief part 13 in a comfortable manner and to be relieved of load during the use of the control means 1, and such that it is not necessary for the hand to be removed from the load-relief surface 13 in order for the thumb and finger to reach and influence the activation means 10A-10C, 11A-11C. The hand support 12 is therefore arranged such that it can be shaped through deformation, and the adapted shape of the hand support is retained until subsequent reshaping is carried out by a user.

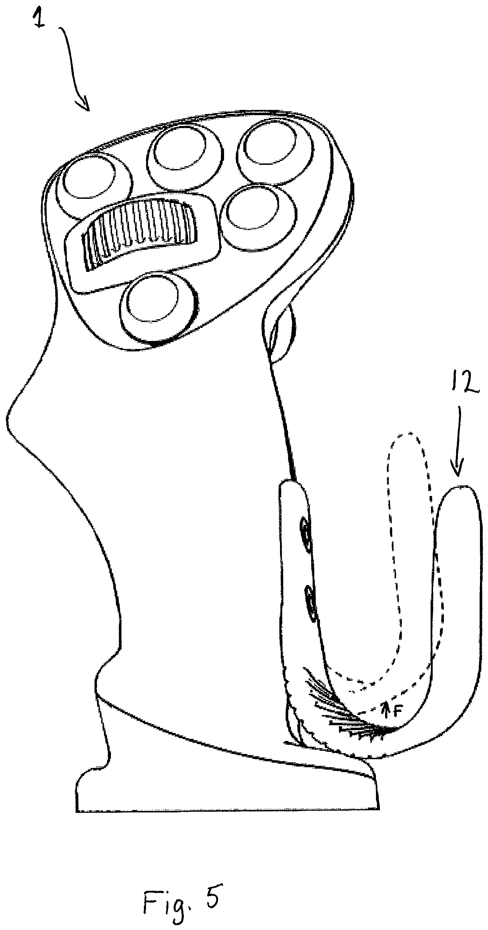

The hand support 12 can be reshaped in several ways. In Figure 5 it is shown that, through the application of a upwardly directed force F at the load-relief part, the position of the load-relief part is changed, displaced, upwards relative to the longitudinal direction of the control stick and the grip (indicated by dashed lines in the drawing). A corresponding process takes place on the application of a downwardly directed force F. The load-relief surface is thus displaced upwards or downwards such that a hand with a different hand size obtains good support. By applying at least one of a tensile force and a compressive force at the free outer part, the hand support is adapted to different hand thicknesses such that the length of the load-relief part is adapted to the thickness of the relevant hand.

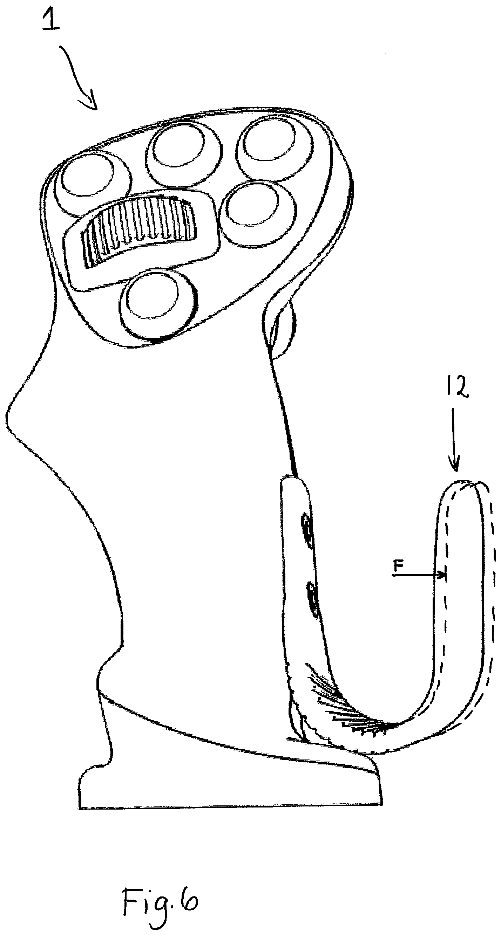

The free outer end 15 extends upwards from the load-relief part 14. The inner surface of the free outer end 15 is intended to function as a support with which the back of the hand of the user can come into contact during operation of the control means 1. In Figure 6 it is shown that the position of the free outer end 15 is adapted to the user's hand 30 through displacement, pressure, drawing, such that the distance between the grip 2 and the free outer end 15 of the hand support is adapted (indicated by the dashed line in the drawing) to the thickness of the hand and can come into contact with the back of the hand comfortably.

Through the application of a force F at the free end of the hand support, in a radial direction outwards or inwards, the distance between the free outer end and the surface of the grip can be varied.

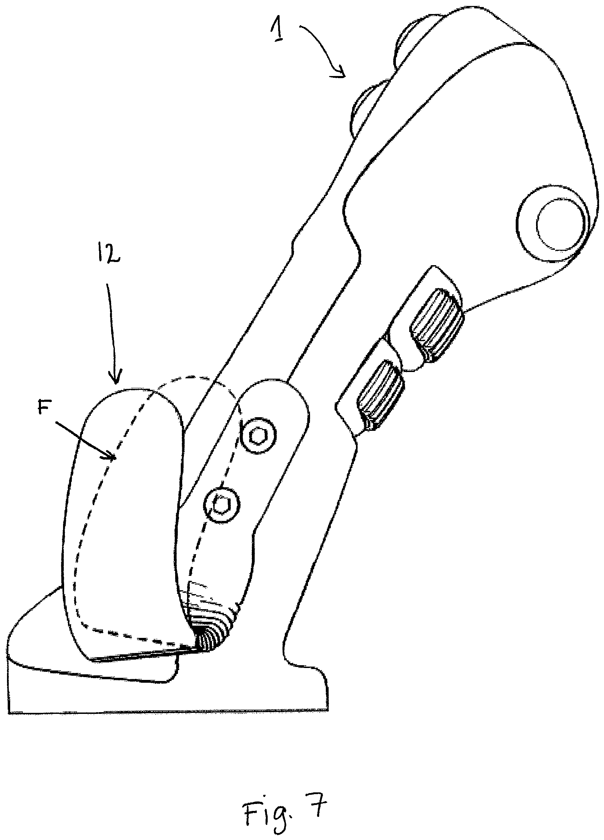

In Figure 7 it is shown that, by the application of a force F at the free outer end in the forwards direction (indicated by a dashed line in the drawing) or in a direction towards the user's arm, the position of the free outer end relative to the grip 2 and the user's hand can be varied,

The hand support 12 functions also as a further control means, or counterpiece, when the user can, in certain positions, guide the direction of motion of the control means 1 by pressing the back of the hand against the hand support instead of guiding the motion of the control means through a fixed grip with the complete hand around the grip of the control means. This is particularly advantageous when it is necessary not only to retain the control means 1 in a certain condition with the hand but also at the same time to operate the activation means 10, 11.

The hand support 12 makes it possible for the user in such situations to free the hand from holding around the grip 2 without the operator losing control over the control means, since the back of the hand is resting against the hand support at the same time as the thumb and fingers are used to operate the activation means 10, 11.

Figure 8 illustrates the control stick according to Figure 1 in a perspective view with the hand of a user introduced into the hand support 12. The hand 30 has a thumb surface 30a, a transverse surface 30b, a back of the hand 30c, and a palm 30d.

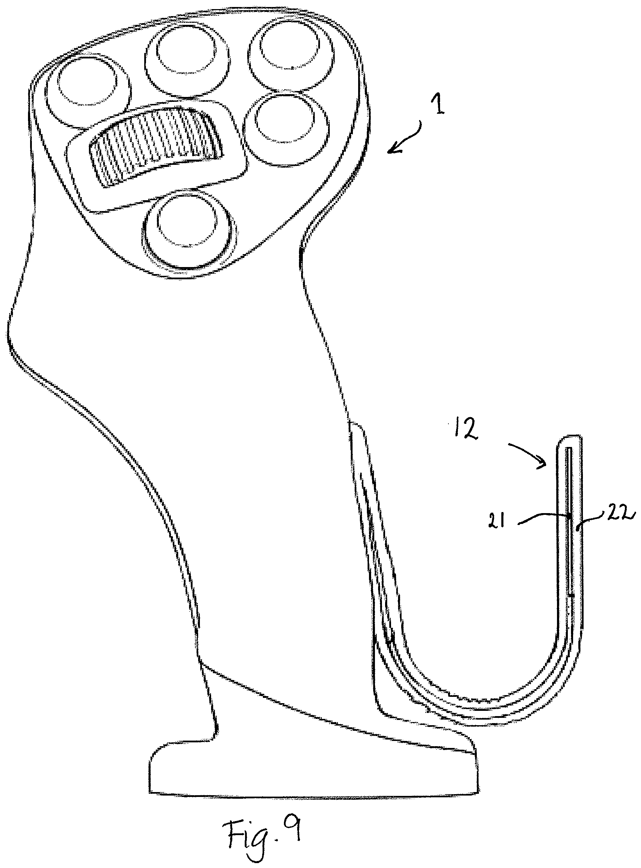

The hand support 12 is illustrated in cross-section in Figure 9. The hand support comprises an internal core 21 and a cover 22 that surrounds the core.

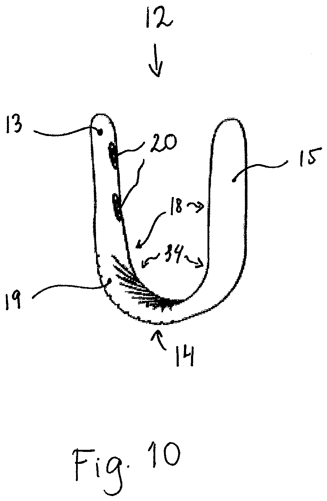

Figure 10 illustrates that the hand support 12 has an extended structure in the form of a band 17. The extended band structure 17 a has a broad side 18 and a narrow side 19, where the broad side 17 forms a contact surface (34) against the user's hand. The inner end 13 of the hand support is formed to be joined to the grip 2. The inner end 13 in this example becomes somewhat more narrow and is provided with indentations 20 for fastening arrangements.

The extended structure 17, the band, is constructed from a material or combination of materials that has properties such that the shape of the band can be changed through deformation and can retain a desired form, until the hand support is again influenced by deforming forces. It is preferable that the internal core 21 of the extended structure consist of a metal, but it is conceivable also to use an artificial material if the desired effects are obtained. It is conceivable also to use expanded metal or similar with a large number of penetrating sections that is designed such that it can be bent and stretched and that demonstrates similar properties with respect to torsional rigidity and elasticity.

The inner core is surrounded by a cover 22, preferably of rubber or similar artificial material, that contributes by its properties to the ability of the hand support to be reshaped. It is conceivable also to use leather or a textile-based material such that the material and design of the cover are comfortable and ergonomically advantageous, able to withstand wear and to have an attractive design. The surface of the hand support, the cover 22, may be provided with various structures. The load-relief part 14 in the example shown in Figure 1 is partially provided with ribs 32 or fluting on its inner surface and outer surface The ribs in the cover 22 facilitate the reshaping of the hand support through stretching, rotation, drawing and pressure.

The hand support 12 has the characteristic of being elastoplastic, i.e. it can be deformed, but it can be reshaped several times and retain its shape after a deformation, reshaping, has been carried out. The material or materials that are components are of such a nature that the resulting shape is retained until the shape of the band is again changed by the application of forces. These properties are intended to allow the hand support to be deformed and to take up different shapes through the application of a tensile force, a compressive force or a rotating force onto the component parts of the hand support, and such that the hand support 12 can be shaped and reshaped several times without losing this effect. In one embodiment, the extended band-shaped structure comprises at least one material that can be plasticly deformed, such as metal. The reshaping normally takes place manually, i.e. the user does not need to use any special tools in order to carry out an adaptation of the hand support to an individual. The hand support may, of course, be made from a material that does require tools that develop power in order to be reshaped.

During the manufacture of the hand support, it is preferable that the core 21 is initially arranged as a plane sheet formed with penetrating holes 20 arranged to receive attachment fittings 23.

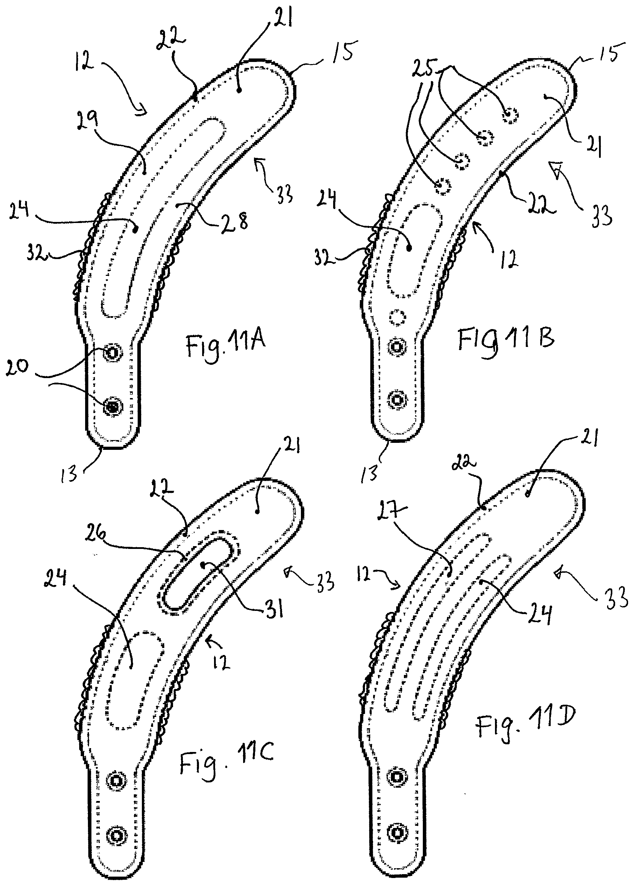

A hand support in longitudinal cross-section is shown in Figures 11A-11D. It is there shown that when the hand support is in a plane condition the longitudinal direction of the extended structure 17 has a curved form (33) at one of its ends.

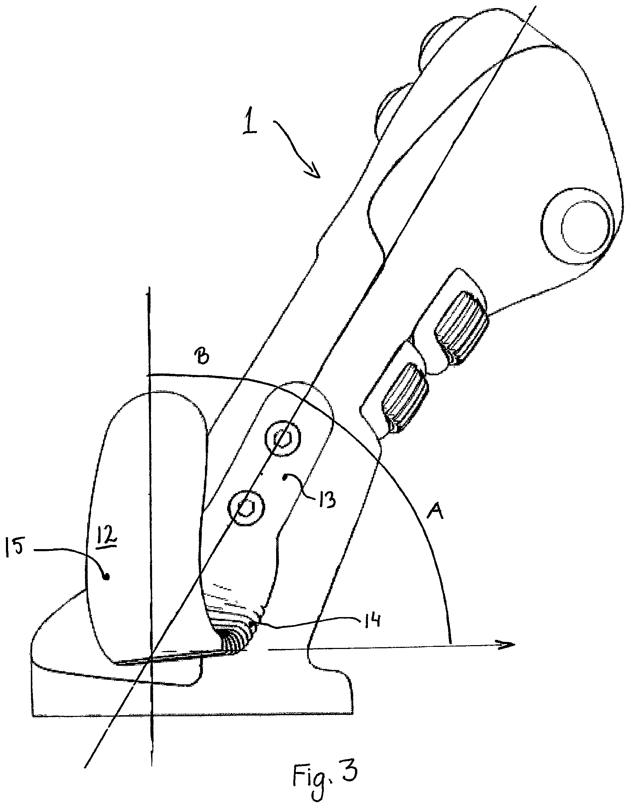

This form of the hand support is particularly advantageous when the control means has an oblique position and is oriented not completely vertically. This is shown particularly clearly in Figure 3. It is there shown that the control means 1 and the grip 2 in this example are arranged to be angled at an angle A to the horizontal plane, which is advantageous for ergonomics. The inner part 13 of the hand support has a longitudinal direction that is arranged in line with the longitudinal direction of the grip, and demonstrates for this reason an essentially equal angle A to the horizontal plane. The free outer end 15 of the hand support is directed essentially vertically, see Figure 3, in order to ensure that the points of contact for the hand support are arranged relative to the back of the hand in a manner that is advantageous for the operation and comfortable. An angle B between the inner part 13 of the hand support and its free outer end 15 is thus formed. In order to achieve that the hand support obtains a deviation in angle of this type while at the same time the load-relief surface 14 is essentially horizontal, the hand support is formed when in a plane condition to have a curvature 33 along its longitudinal direction. The curvature ensures that the desired angle is achieved while an essentially horizontal load-relief surface is at the same time retained. This means that the hand support provides support and a good working position for the user.
Such a hand support in its plane condition is shown in different variants in Figures 11A-11D. The hand support and the extended band-shaped structure 17 have a curved (33) form, the shape of a bow, in their longitudinal direction.

The hand support 12, the extended structure 17 in the form of a band, is, therefore, provided with a curved end that forms the free outer end 15. The radius of the curvature can be selected and adapted at differently angled control means 1 such that the free outer end is directed essentially vertically.

Figures 11A-11D show that the core 21, the sheet, is arranged with at least one penetrating extended indentation 24. The extended indentation is arranged at least in the region of the sheet that corresponds to the load-relief surface 14 and the location at which the load-relief surface is joined to the free outer end 15, i.e. the rounded lower part of the hand support 12. The extended indentation 24 ensures that the torsional rigidity of the sheet around its longitudinal direction is reduced, which is advantageous when carrying out shaping and adaptation of the hand support.

Figure 11A shows a variant in which the penetrating extended indentation 24 extends along the complete length of the sheet, and the core of the hand support demonstrates two shanks 28, 29 one on each side of the indentation.

Figures 11B and 11C show variants in which the penetrating extended indentation 24 is limited to the region that corresponds to the load-relief surface 14 and where the load-relief surface is united with the free outer end 15.
Figure 11B shows a variant in which the core of the hand support has further indentations 25, arranged the region of the free outer end 15. These further indentations 25 have the effect that the adhesion of the cover is improved during the joining of the core and the cover through the indentations. The indentations 25 may have different shapes, such as circular and square.

The core of the hand support demonstrates in Figure 11C an additional extended indentation 26 arranged in the region of the free outer end 15. In this embodiment of the hand support, also the cover 22 is provided with a penetrating opening 31 such that the hand support demonstrates a visible penetrating opening 31. This contributes to ventilating the compartment between the hand and the hand support.
Figure 11D shows a variant in which the core of the hand support an additional extended indentation 27 arranged parallel to the first indentation, which increases the flexibility and capacity for turning of the hand support.

The core of the hand support, thus, may be provided with additional penetrating indentations.

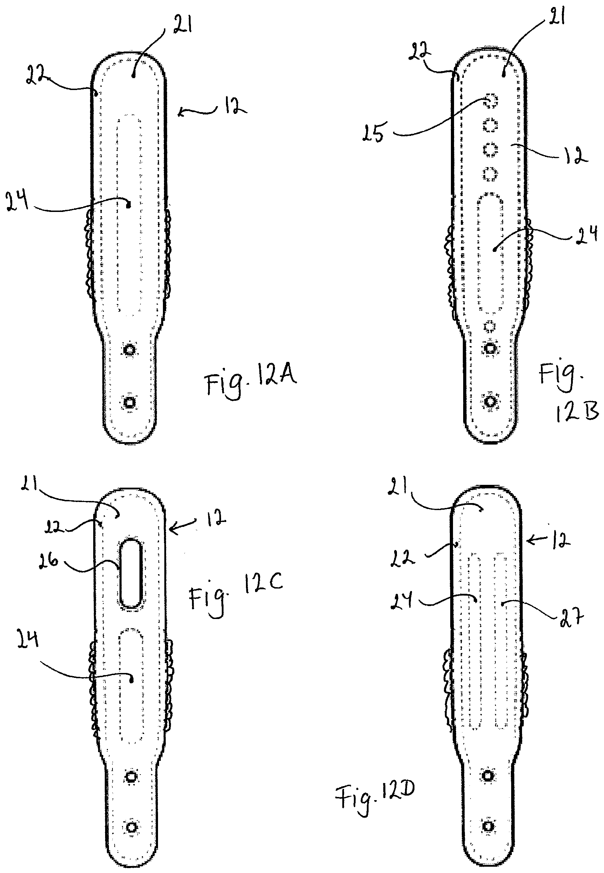

Figures 12A-12D show a further embodiment of the hand support 12 in its plane condition, where the extended structure a form that is straight in the longitudinal direction. Such a hand support can be used when the control stick is directed essentially vertically with the same effect and functions as have been previously described. The variants shown in Figures 12A-12D correspond otherwise to the variants shown in Figures 11A-11D.

The hand support 12 is designed to be pliable such that it can be adapted to the hand of an individual through tensile forces and pressure forces being applied to the hand support that is arranged at the control means.

The hand support is arranged to be adapted for different hand sizes. The hand support is pliable such that the position of the hand along the grip is to be comfortable relative to the activation means.

The hand support is initially arranged in a plane condition in order subsequently to be reshaped through deformation to a shape for use, that is mounted at a control means. Further adjustment of the hand support in different directions can be subsequently carried out.

The hand support may be fixed arranged at a control means according to invention, in which case the inner end of the hand support is mounted using attachment fittings at the control means. The attachment fitting may be a screw joint or similar.
It is advantageous that the hand support be mounted in a manner that makes it possible to exchange it when worn.

Alternatively, the hand support may be marketed and sold separately in order to be arranged at an existing control means. The hand support in this case may be shaped in advance for a hand of normal size, or it may be in a plane condition such that the user can shape it according to his or her desires. The hand support can in this way adopt different shapes in order to be adapted to different hand sizes and hand thicknesses.

The hand support 12 can be reshaped a large number of times, and thus the control means 1 and the working machine to which it is connected can be adapted in a simple manner to several different individual users or operators.

Operation and guidance with the control means 1 can be carried out not only through motion of the complete control means in all directions, but also through the use of the activation means 10A-10C, 11A-11C in all positions that it can be conceived that the control means can take up. Any finger at all, except for the thumb, can be used to operate the activation means at the rear surface of the control means, but the index finger or middle finger is preferably used. The control means 1 can in this way be held and surrounded by the hand while the thumb and several fingers are at the same time free to be used simultaneously and individually to operate the activation means. The activation means at the front surface and rear surface can in this way be operated at the same time. Through the control means 1 having a hand support 12 that can be shaped to the user's hand, high safety is achieved and problems with muscle tension and cramp are avoided.

The control means 1 comprises a number of parts that can be manufactured in one or several types of plastic material that have advantageous ergonomic properties. The control means has an internal hollow compartment that is used to house the electronic components that are necessary to control the control means, cables, and possibly a microprocessor. The control means 1 comprises also electronic circuits and cable connectors and connection arrangement for the connection of the control means to a control system at the vehicle or working machine. This makes it possible to transmit operating signals to the control system, which is preferably an electrical, electrohydraulic or hydraulic system.

Alternatively, the control means 1 may be arranged at another vehicle, for example a powered wheelchair, or directly to a control system, in which case the point of rotation is normally arranged in connection with the fastening of the control means.

## Claims

1. A control means (1) comprising
a grip (2) arranged to be held by a hand, where the hand is oriented with its thumb side directed upwards, the grip having a connection end (3) at its lower end and a free upper end (4) arranged opposite to the connection end where the grip is arranged between the connection end and the free end,
at least one activation means (10A-10C, 11A-11C) arranged at at least one of the free end and the grip, where the activation means (10A-10C, 11A-11C) are intended to be operated with a part of the hand, a thumb or a finger, whereby the grip (2) is provided with a hand support (12) in order to support the hand (30) of a user, **characterised in that** the hand support (12) is pliable such that the control means (1) can be adapted to a user's hand (30) and **in that** the hand support (12) has a free outer end (15) that is arranged to come into contact with the back (30c) of the hand.

2. The control means according to claim 1, **characterised in that** the hand support (12) is arranged at the side of the grip that is directed towards the user's palm.

3. The control means according to any one of the preceding claims, **characterised in that** the hand support (12) has a load-relief part (14) that is arranged to come into contact with the side of the hand.

4. The control means according to any one of the preceding claims, **characterised in that** the free outer end (15) of the hand support forms an additional control means.

5. The control means according to any one of the preceding claims, **characterised in that** the hand support (12) is pliable through deformation and that the adapted shape of the hand support is retained until a subsequent reshaping is carried out.

6. The control means according to any one of the preceding claims, **characterised in that** the hand support (12) is pliable through the application of a force F at the load-relief part (14) such that its position relative to the longitudinal direction of the grip (2) can be varied.

7. The control means according to any one of the preceding claims, **characterised in that** the hand support (12) is pliable through the application of a force F at the load-relief part (14) in a forwards direction or in a direction towards the user's arm in order to change the position of the load-relief part relative to the grip (2).

8. The control means according to any one of the preceding claims, **characterised in that** the hand support (12) is pliable through the application of a force F at the free outer end (15) of the hand support such that the distance between the free outer end and the surface of the grip can be varied.

9. The control means according to any one of the preceding claims, **characterised in that** the hand support (12) is pliable through the application of a force F at the free outer end (15) in a forwards direction or in a direction towards the user's arm, in order to change the position of the free outer end (15) relative to the grip (2).

10. The control means according to any one of the preceding claims, **characterised in that** the hand support (12) is formed from an extended structure (17) that has a broad side (18) and a narrow side (19), where the broad side forms a contact surface (34) against the user's hand.

11. The control means according to claim 10, **characterised in that** the extended structure (17) comprises at least one material that can be plastically deformed.

12. The control means according to claim 10 or 11, **characterised in that** when the extended structure forming the hand support is in a plane condition the longitudinal direction of the extended structure (17) has a curved form (33).

13. The control means according to claim 11, **characterised in that** the longitudinal direction of the extended structure (17) has a straight form.

14. The control means according to any one of the preceding claims, **characterised in that** the hand support (12) comprises a core (21) of at least one of metal and artificial material, and a cover (22) that surrounds the core, where the cover comprises an artificial material.

15. The control means according to claim 14, **characterised in that** the core (21) is provided with at least one penetrating indentation (24).

16. The control means according to claim 15, **characterised in that** the penetrating indentation (24) is extended.

17. The control means according to any one claims 15-16, **characterised in that** the core (21) is provided with several penetrating indentations (24, 25, 26, 27).

18. The control means according to any one of the preceding claims, **characterised in that** the control means is connected to a guide means in a working machine or a vehicle.

19. A hand support (12) for a control means intended to support a hand that holds the control means such that the hand is oriented with its thumb side directed upwards, where the hand support (12) comprises an inner part (13) arranged to be attached to the control means, a load-relief part (14) which supports the side (30B) of the user's hand, and a free outer end (15) comprising a contact surface (34), the load-relief part (14) uniting the inner part (13) with the free outer end (15), **characterised in that** the said contact surface (34) is intended to come into contact with the back surface of the hand, and the hand support (12) is pliable such that it can be adapted to a user's hand.

20. The hand support according to claim 19, **characterised in that** the hand support (12) is pliable through deformation and that the adapted shape of the hand support is retained until a subsequent reshaping is carried out.

21. The hand support according to claim 19 or 20, **characterised in that** it is pliable through the application of a force F at the load-relief part such that its position can be varied relative to a control means to which it is connected.

22. The hand support according to any one of claims 19-21, **characterised in that** it comprises an extended structure (17) that has a broad side (18) and a narrow side (19), where the broad side forms a contact surface (34) against the user's hand.

23. The hand support according to any one of claims 19-22, **characterised in that** it is initially arranged in a plane condition in order subsequently to be reshaped through deformation to a shape for use.

24. The hand support according to claim 23, **characterised in that** when the hand support is in a plane condition the longitudinal direction of the extended structure (17) has a curved shape (33).

25. The hand support according to claim 23, **characterised in that** when the hand support is in a plane condition the longitudinal direction of the extended structure (17) has a straight form.

26. The hand support according to any one of claims 19-25, **characterised in that** the extended band-shaped structure comprises at least one material that can be plastically deformed.

27. The hand support according to any one of claims 19-26, **characterised in that** the hand support (12) comprises a core (21) of at least one of metal and artificial material, and a cover (22) that surrounds the core, where the cover comprises an artificial material.

28. The hand support according to claim 27, **characterised in that** the core (21) is provided with at least one penetrating indentation (24).

29. The hand support according to claim 28, **characterised in that** the penetrating indentation (24) is extended.

30. The hand support according to either of claims 28 or 29, **characterised in that** the core (21) is provided with several penetrating indentations (24, 25, 26, 27).

## Patentansprüche

1. Steuermittel (1), umfassend
einen Griff (2), der so angeordnet ist, dass er von einer Hand gehalten werden kann, wobei die Hand mit ihrer Daumenseite nach oben gerichtet ist, wobei der Griff ein Verbindungsende (3) an seinem unteren Ende und ein freies oberes Ende (4) aufweist, das dem Verbindungsende gegenüberliegt, wobei der Griff zwischen dem Verbindungsende und dem freien Ende angeordnet ist,
mindestens ein Betätigungsmittel (10A-10C, 11A-11C), das an mindestens einem der freien Enden und dem Griff angeordnet ist, wobei das Betätigungsmittel (10A-10C, 11A-11C) dazu bestimmt ist, mit einem Teil der Hand, einem Daumen oder einem Finger betätigt zu werden, wobei
der Griff (2) mit einer Handstütze (12) versehen ist, um die Hand (30) eines Benutzers zu stützen, **dadurch gekennzeichnet, dass**
die Handstütze (12) so biegsam ist, dass das Steuermittel (1) an die Hand (30) eines Benutzers angepasst werden kann, und dass die Handstütze (12) ein freies äußeres Ende (15) aufweist, das so angeordnet ist, dass es mit dem Handrücken (30c) in Kontakt kommt.

2. Steuermittel nach Anspruch 1, **dadurch gekennzeichnet, dass** die Handstütze (12) an der Seite des Griffs angeordnet ist, die auf die Handfläche des Benutzers gerichtet ist.

3. Steuermittel nach einem der vorhergehenden Ansprüche, **dadurch gekennzeichnet, dass** die Handstütze (12) ein Druckentlastungsteil (14) aufweist, das so angeordnet ist, dass es mit der Seite der Hand in Kontakt kommt.

4. Steuermittel nach einem der vorhergehenden Ansprüche, **dadurch gekennzeichnet, dass** das freie äußere Ende (15) der Handstütze ein zusätzliches Steuermittel bildet.

5. Steuermittel nach einem der vorhergehenden Ansprüche, **dadurch gekennzeichnet, dass** die Handstütze (12) durch Verformung biegsam ist und dass die angepasste Form der Handstütze bis zu einer nachfolgenden Umformung erhalten bleibt.

6. Steuermittel nach einem der vorhergehenden Ansprüche, **dadurch gekennzeichnet, dass** die Handstütze (12) durch Aufbringen einer Kraft F auf das Druckentlastungsteil (14) so biegsam ist, dass ihre Position in Bezug auf die Längsrichtung des Griffs (2) veränderbar ist.

7. Steuermittel nach einem der vorhergehenden Ansprüche, **dadurch gekennzeichnet, dass** die Handstütze (12) durch Aufbringen einer Kraft F am Druckentlastungsteil (14) in Vorwärtsrichtung oder in Richtung zum Arm des Benutzers biegsam ist, um die Position des Druckentlastungsteils gegenüber dem Griff (2) zu verändern.

8. Steuermittel nach einem der vorhergehenden Ansprüche, **dadurch gekennzeichnet, dass** die Handstütze (12) durch Aufbringen einer Kraft F am freien äußeren Ende (15) der Handstütze so biegsam ist, dass der Abstand zwischen dem freien äußeren Ende und der Grifffläche veränderbar ist.

9. Steuermittel nach einem der vorhergehenden Ansprüche, **dadurch gekennzeichnet, dass** die Handstütze (12) durch Aufbringen einer Kraft F am freien äußeren Ende (15) in Vorwärtsrichtung oder in Richtung des Armes des Benutzers biegsam ist, um die Position des freien äußeren Endes (15) gegenüber dem Griff (2) zu verändern.

10. Steuermittel nach einem der vorhergehenden Ansprüche, **dadurch gekennzeichnet, dass** die Handstütze (12) aus einer verlängerten Struktur (17) gebildet ist, die eine Breitseite (18) und eine Schmalseite (19) aufweist, wobei die Breitseite eine Kontaktfläche (34) gegen die Hand des Benutzers bildet.

11. Steuermittel nach Anspruch 10, **dadurch gekennzeichnet, dass** die verlängerte Struktur (17) mindestens ein Material umfasst, das plastisch verformbar ist.

12. Steuermittel nach Anspruch 10 oder 11, **dadurch gekennzeichnet, dass**, wenn sich die die Handstütze bildende verlängerte Struktur in einem ebenen Zustand befindet, die Längsrichtung der verlängerten Struktur (17) eine gekrümmte Form (33) aufweist.

13. Steuermittel nach Anspruch 11, **dadurch gekennzeichnet, dass** die Längsrichtung der verlängerten Struktur (17) eine gerade Form aufweist.

14. Steuermittel nach einem der vorhergehenden Ansprüche, **dadurch gekennzeichnet, dass** die Handstütze (12) einen Kern (21) aus mindestens einem Metall und Kunstmaterial und eine Abdeckung (22) umfasst, die den Kern umgibt, wobei die Abdeckung ein Kunstmaterial umfasst.

15. Steuermittel nach Anspruch 14, **dadurch gekennzeichnet, dass** der Kern (21) mit mindestens einer durchdringenden Vertiefung (24) versehen ist.

16. Steuermittel nach Anspruch 15, **dadurch gekennzeichnet, dass** die durchdringende Vertiefung (24) verlängert ist.

17. Steuermittel nach einem der Ansprüche 15 - 16, **dadurch gekennzeichnet, dass** der Kern (21) mit mehreren durchdringenden Vertiefungen (24, 25, 26, 27) versehen ist.

18. Steuermittel nach einem der vorhergehenden Ansprüche, **dadurch gekennzeichnet, dass** das Steuermittel mit einem Führungsmittel in einer Arbeitsmaschine oder einem Fahrzeug verbunden ist.

19. Handstütze (12) für ein Steuermittel, das dazu bestimmt ist, eine Hand zu stützen, die das Steuermittel so hält, dass die Hand mit ihrer nach oben gerichteten Daumenseite ausgerichtet ist, wobei die Handstütze (12) einen inneren Teil (13) umfasst, der dazu bestimmt ist, an dem Steuermittel befestigt zu werden, einen Druckentlastungsteil (14), der die Seite (30B) der Hand des Benutzers trägt, und ein freies äußeres Ende (15) mit einer Kontaktfläche (34), wobei das Druckentlastungsteil (14) das innere Teil (13) mit dem freien äußeren Ende (15) verbindet, **dadurch gekennzeichnet, dass** die Kontaktfläche (34) dazu bestimmt ist, mit der Rückseite der Hand in Kontakt zu kommen, und die Handstütze (12) so biegsam ist, dass sie an die Hand eines Benutzers angepasst werden kann.

20. Handstütze nach Anspruch 19, **dadurch gekennzeichnet, dass** die Handstütze (12) durch Verformung biegsam ist und dass die angepasste Form der Handstütze bis zu einer nachfolgenden Umformung erhalten bleibt.

21. Handstütze nach Anspruch 19 oder 20, **dadurch gekennzeichnet, dass** sie durch Aufbringen einer Kraft F auf das Druckentlastungsteil biegsam ist, so dass ihre Position in Bezug auf ein Steuermittel, mit dem sie verbunden ist, veränderbar ist.

22. Handstütze nach einem der Ansprüche 19 - 21, **dadurch gekennzeichnet, dass** sie eine verlängerte Struktur (17) umfasst, die eine Breitseite (18) und eine Schmalseite (19) aufweist, wobei die Breitseite eine Kontaktfläche (34) gegen die Hand des Benutzers bildet.

23. Handstütze nach einem der Ansprüche 19 - 22, **dadurch gekennzeichnet, dass** sie zunächst in einem ebenen Zustand angeordnet ist, um anschließend durch Verformung zu einer Gebrauchsform umgeformt zu werden.

24. Handstütze nach Anspruch 23, **dadurch gekennzeichnet, dass**, wenn sich die Handstütze in einem ebenen Zustand befindet, die Längsrichtung der verlängerten Struktur (17) eine gekrümmte Form (33) aufweist.

25. Handstütze nach Anspruch 23, **dadurch gekennzeichnet, dass**, wenn sich die Handstütze in einem ebenen Zustand befindet, die Längsrichtung der verlängerten Struktur (17) eine gerade Form aufweist.

26. Handstütze nach einem der Ansprüche 19 - 25, **dadurch gekennzeichnet, dass** die verlängerte bandförmige Struktur mindestens ein Material umfasst, das plastisch verformbar ist.

27. Handstütze nach einem der Ansprüche 19 - 26, **dadurch gekennzeichnet, dass** die Handstütze (12) einen Kern (21) aus mindestens einem Metall und Kunstmaterial und eine den Kern umgebende Abdeckung (22) umfasst, wobei die Abdeckung ein Kunstmaterial umfasst.

28. Handstütze nach Anspruch 27, **dadurch gekennzeichnet, dass** der Kern (21) mit mindestens einer durchdringenden Vertiefung (24) versehen ist.

29. Handstütze nach Anspruch 28, **dadurch gekennzeichnet, dass** die durchdringende Vertiefung (24) verlängert ist.

30. Handstütze nach einem der Ansprüche 28 oder 29, **dadurch gekennzeichnet, dass** der Kern (21) mit mehreren durchdringenden Vertiefungen (24, 25, 26, 27) versehen ist.

## Revendications

1. Moyen de commande (1) comprenant
une poignée (2) conçue pour être tenue dans une main, la main étant orientée avec son côté pouce dirigé vers le haut, la poignée présentant une extrémité de raccordement (3) à son extrémité inférieure et une extrémité supérieure libre (4) disposée à l'opposé de l'extrémité de raccordement, la poignée étant disposée entre l'extrémité de raccordement et l'extrémité libre,
au moins un moyen d'activation (10A-10C, 11A-11C) disposé sur l'une au moins parmi l'extrémité libre et la poignée, les moyens d'activation (10A-10C, 11A-11C) étant destinés à être actionnés avec une partie de la main, un pouce ou un doigt,
moyennant quoi la poignée (2) est dotée d'un support de main (12) pour supporter la main (30) d'un utilisateur, **caractérisé en ce que**
le support de main (12) peut être plié de manière à ce que le moyen de commande (1) puisse être adapté à la main (30) de l'utilisateur et **en ce que** le support de main (12) présente une extrémité extérieure libre (15) conçue pour être en contact avec le dos (30c) de la main.

2. Moyen de commande selon la revendication 1, **caractérisé en ce que** le support de main (12) est disposé sur le côté de la poignée dirigé vers la paume de l'utilisateur.

3. Moyen de commande selon l'une quelconque des revendications précédentes, **caractérisé en ce que** le support de main (12) comporte une partie d'allègement de charge (14) conçue pour être en contact avec le côté de la main.

4. Moyen de commande selon l'une quelconque des revendications précédentes, **caractérisé en ce que** l'extrémité extérieure libre (15) du support de main forme un moyen de commande supplémentaire.

5. Moyen de commande selon l'une quelconque des revendications précédentes, **caractérisé en ce que** le support de main (12) peut être plié par déformation et **en ce que** la forme adaptée du support de main est maintenue jusqu'à ce qu'une remise en forme consécutive soit effectuée.

6. Moyen de commande selon l'une quelconque des revendications précédentes, **caractérisé en ce que** le support de main (12) peut être plié par application d'une force F sur la partie d'allégement de charge (14) de manière à ce que sa position relative par rapport à la direction longitudinale de la poignée (2) puisse être modifiée.

7. Moyen de commande selon l'une quelconque des revendications précédentes, **caractérisé en ce que** le support de main (12) peut être plié par application d'une force F sur la partie d'allègement de charge (14) dans une direction vers l'avant ou dans une direction vers le bras de l'utilisateur pour modifier la position de la partie d'allègement de charge par rapport à la poignée (2).

8. Moyen de commande selon l'une quelconque des revendications précédentes, **caractérisé en ce que** le support de main (12) peut être plié par application d'une force F à l'extrémité extérieure libre (15) du support de main de manière à ce qu'une distance entre l'extrémité extérieure libre et la surface de la poignée puisse être modifiée.

9. Moyen de commande selon l'une quelconque des revendications précédentes, **caractérisé en ce que** le support de main (12) peut être plié par application d'une force F à l'extrémité extérieure libre (15) dans une direction vers l'avant ou dans une direction vers le bras de l'utilisateur, pour modifier la position de l'extrémité extérieure libre (15) par rapport à la poignée (2).

10. Moyen de commande selon l'une quelconque des revendications précédentes, **caractérisé en ce que** le support de main (12) est formé à partir d'une structure allongée (17) présentant un côté large (18) et un côté étroit (19), le côté large formant une surface de contact (34) contre la main de l'utilisateur.

11. Moyen de commande la revendication 10, **caractérisé en ce que** la structure allongée (17) comprend au moins un matériau apte à être déformé élastiquement.

12. Moyen de commande selon la revendication 10 ou 11, **caractérisé en ce que** lorsque la structure allongée formant le support de main est dans un état à plat, la direction longitudinale de la structure allongée (17) présente une forme courbe (33).

13. Moyen de commande selon la revendication 11, **caractérisé en ce que** la direction longitudinale de la structure allongée (17) présente une forme rectiligne.

14. Moyen de commande selon l'une quelconque des revendications précédentes, **caractérisé en ce que** le support de main (12) comprend un noyau (21) constitué d'au moins un matériau parmi un métal et une matière synthétique, et une enveloppe (22) entourant le noyau, l'enveloppe comprenant une matière synthétique.

15. Moyen de commande selon la revendication 14, **caractérisé en ce que** le noyau (21) est pourvu d'au moins une indentation pénétrante (24).

16. Moyen de commande selon la revendication 15, **caractérisé en ce que** l'indentation pénétrante (24) est allongée.

17. Moyen de commande selon l'une quelconque des revendications 15 - 16, **caractérisé en ce que** le noyau (21) est pourvu de plusieurs indentations pénétrantes (24, 25, 26, 27).

18. Moyen de commande selon l'une quelconque des revendications précédentes, **caractérisé en ce que** le moyen de commande est relié à un moyen de guidage dans un engin de chantier ou un véhicule.

19. Support de main (12) pour un moyen de commande, destiné à supporter une main tenant le moyen de commande de telle façon que la main est orientée avec son côté pouce dirigé vers le haut, le support de main (12) comprenant une partie intérieure (13) conçue pour être fixée au moyen de commande, une partie d'allégement de charge (14) supportant le côté (30B) de la main de l'utilisateur, et une extrémité extérieure libre (15) comprenant une surface de contact (34), la partie d'allégement de charge (14) réunissant la partie intérieure (13) et l'extrémité extérieure libre (15), **caractérisé en ce que** ladite surface de contact (34) est destinée à être en contact avec la surface arrière de la main, et le support de main (12) peut être plié de manière à pouvoir être adapté à la main d'un utilisateur.

20. Support de main selon la revendication 19, **caractérisé en ce que** le support de main (12) peut être plié par déformation et **en ce que** la forme adaptée du support de main est maintenue jusqu'à ce qu'une remise en forme consécutive soit effectuée.

21. Support de main selon la revendication 19 ou 20, **caractérisé en ce que** celui-ci peut être plié par application d'une force F sur la partie d'allègement de charge de manière à ce que sa position par rapport à un moyen de commande auquel il est raccordé puisse être modifiée.

22. Support de main selon l'une quelconque des revendications 19 - 21, **caractérisé en ce qu'**il comprend une structure allongée (17) présentant un côté large (18) et un côté étroit (19), le côté large formant une surface de contact (34) contre la main de l'utilisateur.

23. Support de main selon l'une quelconque des revendications 19 - 22, **caractérisé en ce que** celui-ci est initialement disposé dans un état à plat pour ensuite être remis en forme par déformation en une forme pour l'emploi.

24. Support de main selon la revendication 23, **caractérisé en ce que** lorsque le support de main est dans un état à plat, la direction longitudinale de la structure allongée (17) présente une forme courbe (33).

25. Support de main selon la revendication 23, **caractérisé en ce que** lorsque le support de main est dans un état à plat, la direction longitudinale de la structure allongée (17) présente une forme rectiligne.

26. Support de main selon l'une quelconque des revendications 19 - 25, **caractérisé en ce que** la structure en forme de bande allongée comprend au moins un matériau apte à être déformé élastiquement.

27. Support de main selon l'une quelconque des revendications 19 - 26, **caractérisé en ce que** le support de main (12) comprend un noyau (21) constitué d'au moins un matériau parmi un métal et une matière synthétique, et une enveloppe (22) entourant le noyau, l'enveloppe comprenant une matière synthétique.

28. Support de main selon la revendication 27, **caractérisé en ce que** le noyau (21) est pourvu d'au moins une indentation pénétrante (24).

29. Support de main selon la revendication 28, **caractérisé en ce que** l'indentation pénétrante (24) est allongée.

30. Support de main selon l'une des revendications 28 ou 29, **caractérisé en ce que** le noyau (21) est pourvu de plusieurs indentations pénétrantes (24, 25, 26, 27).
